Europäisches Patentamt

European Patent Office

Office européen des brevets

(19)

(11) EP 1 378 911 A1

(12) **EUROPEAN PATENT APPLICATION**

(43) Date of publication:
**07.01.2004 Bulletin 2004/02**

(51) Int Cl.7: **G11B 27/10**, G11B 27/031,
G11B 27/11, G11B 27/30,
G11B 27/28, G11B 27/34

(21) Application number: **02425439.3**

(22) Date of filing: **02.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **RAI RADIOTELEVISIONE ITALIANA
(S.p.A.)**
**00195 Roma (IT)**

(72) Inventors:
• **Stroppiana, Mario**
**10136 Torino (IT)**
• **Cecatto, Roberto**
**00136 Roma (IT)**

(74) Representative: **Spandonari, Carlo, Dr. Ing.**
**Spandonari & Modiano s.r.l.**
**corso Duca degli Abruzzi 16**
**10129 Torino (IT)**

(54) **Metadata generator device for identifying and indexing of audiovisual material in a video camera**

(57)     The device comprises a voice-to-text transcriptor (TRANS) driven by a microphone (MIC), for applying the transcripted text to a first input (DATA) of formatter-recorder means (LOG). Corresponding time codes from the the audiovisual material are applied to a second input (TCI) of the formatter-recorder means (LOG). The formatter-recorder means (LOG) transfer the text and the time codes to a digital data recording medium (MEM), under control of enabling means which are actuable by an operator (EK,SW1,SW2,TK), preferably by a key. The transcription results are displayed in real time on a viewfinder (VF) or orther display available on the videocamera so that an operator is enabled to correct the transcription in case of an error.

Fig. 1

**Description**

This invention is concerned with a metadata generator device for identifying and indexing audiovisual material taken from a videocamera, as well as with a video camera equipped with the device.

When preparing and selecting television shots to be broadcast within commercial television programs such as TV newscasts, it is useful, and will more so in the future, to provide the audiovisual shots with metadata connoting the shot contents and their individual sequences, classification keys, etc. Today, such metadata can only be attached to the shots by a manual operation, at a time subsequent to the shot, with attendant need for an overall review of the audiovisual material, generally with participation of the personnel which has taken part in the shooting. Consequently, the operation is long, burdensome and expensive, and moreover it causes a lengthening of the delays before the material can be used.

It is well known that in the television industry the speed of retrieval of the interesting portions of one or more shots is very important during the program assembling step, particularly in the case of newscasts which are taken on location and have then to be spliced in a very short time, immediately before broadcasting. Consequently, the above mentioned review of the shots for identifying, classifying and indexing the audiovisual material is a heavy burden, causing delays in the use of the material, additional personnel costs, etc.

Nowadays, the camera-man performs the takes in sequences, each of which is enabled by a shooting start and stop commands. The sequences taken are recorded in the video recorder at shooting time and the camera-man sometimes notes down the sequential order of the shots on a piece of paper. Back in the studio, the tape cassette is transferred to the production environment, where a search and selection are conducted for the sequences useful for producing the program or newscast. The speed of material search and selection depends on the information made available by the camera-man. Adding information in this step involves a change in the processing, with longer delays and higher costs.

A main object of the invention is therefore to provide a generator of descriptive-identifying metadata, for identifying and indexing audiovisual material simultaneously with their shooting by a videocamera, which device can be integrated with the shooting system and interfaced with the camera-man, so that the generation of the metadata takes place at the same time with the television shooting.

Another object is to provide a device that can be applied to audiovisual material recorded both analogically and digitally, as well as structured in the form of files.

A further object is to provide a device as above, which can be easily and cheaply incorporated into a video camera or videocamcorder.

The invention attains the above and other objects and advantages, such as will appear from the following disclosure, by a metadata generator device for identifying and indexing audiovisual material taken from a videocamera, having the essential features recited in claim 1. Further advantageous, though optional, features of the invention are set forth in the dependent claims.

In the following disclosure, the expression metadata is intended to denote any text or multimedial information, e.g. images, sound, voice, which is not part of the audiovisual contents inherently (i.e. of the video take), but rather is complementary to it, i.e. enhancement, description, identification, remark, etc. More especially, the association between audiovisual takes and associated metadata has an increased usefulness in the case of digital television and distribution of audiovisual material on newmedia channels.

The invention is based on the recognition of the fact that algorithms and devices are available today for voice-to-text transcription, with high success rates, even without the need to train the system to the speaker's voice, and with reference to a quite extended dictionary of words. If limits are imposed to the application, such as Voice Recognition/ Speech Dependant, or Voice Recognition based on a limited dictionary of words, systems and products are available and have already been widely used, having extremely high success rates and offering real-time processing.

The idea in which the invention is based is to use such a system together with a video camera so that a description of the take, spoken by the camera-man of the take, is transcribed to text and is made available in the form of metadata associated with the video. Preferably, the conversion system is trained on the voice of the camera-man and uses a dictionary containing only the words used by the camera-man. Accordingly, each camera-man can train/ select a personal recognition profile and possibly a personal dictionary and store it on a memory support which may be integrated or interfaced with the video camera, e.g. a removable memory such as Memory Stick, CompactFlash, etc.

Synchronization between the voice and its subsequent conversion, on the one hand, and the audiovisual contents, on the other hand, is made primarily on the basis of the Time Codes generated by the videorecorder that is integrated with the video camera.

The invention is described in more detail below, by way of preferred embodiments, with reference to the attached drawings, wherein:

Fig. 1 is a block diagram of a videocamera with recorder, or camcorder, provided with a a metadata generator device according to a first embodiment of the invention; and

Fig. 2 is a block diagram similar to Fig. 1, for a second embodiment of a metadata generator device according to the invention.

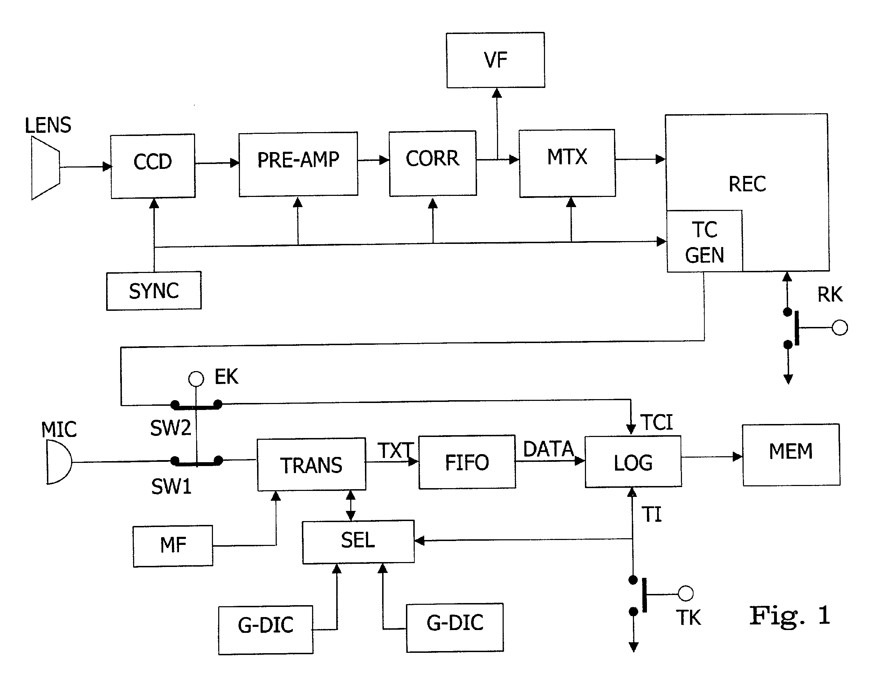

Fig. 1 shows a block diagram of a conventional video camera, comprising a lens LENS for focusing an image onto a photoelectric transcriptor such as a charge-coupled device CCD, preamplifiers and pre-correctors PRE-AMP, followed by color and gamma correctors CORR, as known per se. The videocamera also comprises an RGB-to-MTX conversion matrix MTX, driven by correctors CORR, for outputting analog or digital video signals to a tape-cassette video recorder REC, which can be enabled via a key RK. Upstream to matrix MTX, the videocamera also comprises a viewfinder VF for monitoring the signal from the take and for displaying a set-up menu for the videocamera, as well as any further display, usually LCD displays, as known to a person skilled in the art.

Videorecorder REC may be integral with the videocamera to provide a camcorder, in a way known per se.

The video camera further comprises, also in a way known per se, a sync pulse generator SYNC, which pulses are applied to the several components as sync signals (clock and video syncs) which are locked to one another.

Video recorder REC is provided with a frame-resolution Time Code and Control Track signal generator, which is based on the received video and sync signals, as known in the art. The generated Time Code and Control Track signals are stored on the cassette in dedicated reserved spaces, also as known in the art.

According to the invention, the camcorder has associated with it a metadata generator device comprising a microphone MIC connected to a first input of a voice-to-text transcriptor TRN via a switch SW1 which can be operated by the camcorder operator by means of an enabling key EK. Transcriptor TRN is of a type known per se, e.g. IBM - ViaVoice, and is preferably equipped with two dictionaries such as G-DIC, T-DIC, containing the terminology that is typically used. Dictionary G-DIC is a general dictionary, while dictionary T-DIC is a limited list of data types. Dictionaries G-DIC, T-DIC are selectable through a selector SEL, comprising a switch driven by a key TK. Selector SEL is normally set to the general dictionary G-DIC, and is switched by pressure of key TK, to the more concise type dictionary T-DIC, as explained below.

Transcriptor TRN is preferably equipped with a removable memory MF of phonetic models associated with the camera-man who is using the device.

The output TXT of transcriptor TRN, consisting of alphabetic strings, is progressively accumulated in a buffer memory FIFO, having an output going to a data input DATA of a logic circuit LOG, which is programmed for organizing the received data and save it in a memory MEM as a file, as described below in more detail.

Logic circuit LOG is provided with an input TCI which receives, through a switch SW2 driven by the same key EK driving microphone switch SW1, the Time Code signals coming from video recorder REC, and is further provided with another input TI which receives from key TK the same selection signal that is applied to selector SEL. Logical circuit LOG therefore receives, through input TCI, the time code coinciding with each new phonetic data input to the transcriptor, and, furthermore, it is also informed, through input TI, when the incoming string from FIFO should be interpreted as an indication of type.

The camera-man, as already stated above, issues voice commands for indexing the audiovisual signal constituting the take, descriptions of the shooting consisting of free-text description, instantiation of predefined fields, indications of new, non-predefined fields and their instantiation. The results of the transcription are displayed in real time on the viewfinder or other display available on the video camera, so that they can be immediately checked by the camera-man.

The metadata that are insertable by this method are numerous and partly depend on the kind of use of the video camera. A list is given below, by way of non limitative example, of a few metadata useful in the case of professional on-location shootings of raw material which is to be submitted to subsequent selection and assembly in order to obtain a program item suitable for broadcasting (technically called "contribution", such as a report in a newscast or an interview).

A first class of useful metadata occurs when the camera-man marks portions of the shooting that are regarded as interesting for the subsequent montage, e.g. where an interview is repeated several times, or is interrupted and then taken up again later. The metadata will then comprise a start marker and an end marker for the sequence, having the following meaning: from position xxx to position yyy a sequence useful for montage has been located. Moreover, the indication of the title may be inserted, in order to make it easier to retrieve specific sequences later.

A second class of metadata concerns the insertion of technical comments, where the camera-man can describe the operation he is performing, e.g. "long shot panning", "close up", "zoom", etc.

A third class comprises description of the location, environmental condition and situation, e.g. "take of crowded San Pietro square in sunny day".

Finally, a fourth class comprises free comments.

From the standpoint of implementation, the above types of metadata may be divided into two classes: structured information and free text. The structured information consists of fields which may take predetermined values belonging to a list established in advance, while the free text allows the camera-man to use any linking of words, although there may be limitations on the length of the text.

The structuring of each metadata type has the following general format:

Type - Value - [Time stamp]

The type will be coded with a code identifying the meaning of the metadata to be inserted, within a predetermined list. The value will comply with a format depending on the associated type: in certain cases it might be a numeric value, in other cases a free text, in still other cases a word taken fromn a list of allowable values. The pair Type-Value shall be associated with a reference to the exact point in the audiovisual sequence (as taken by the video camera) with which the metadata should be locked. On the other hand, the presence of the Time stamp depends on the metadata type, as it will appear below.

Metadata are input by a vocal command. The mode of metadata insertion is enabled when the video take is started (button RK on the camcorder) and can be momentarily disabled by pressing button EK which enables acquisition of the time references (Time Code) for the differnet segments belonging in the video take. At this point, the camera-man can request data input by pressing button TK enabling type selection and by uttering the name associated to the desired metadata type.

During this step, voice-to-text transcriptor TRN will attempt recognition only of words assigned to represent items of the list of metadata types as contained in the listof types T-DIC. When recognition of the Type has been achieved, the apparatus will be configured for acceptance of a corresponding value input, and will reject any words or word sequences not admissible for that metadata type. By pressing enabling key TK again, a fresh metadata type may be selected for valorization, i.e. for filling with data. The status of the operation is displayed on the viewfinder VF of the camera, or on another display available on the camera, to allow the operator to check proper recognition of the vocal commands in real time and correct any errors.

The list of metadata Types may reside in a fixed memory within the videocamera, or alternatively it may reside in a removable memory, e.g. Memory Stick or the like. In that case, the list of metadata Types may be of a general type or easily customized to the particular type of shooting.

The expression "take" or "clip" indicates a portion comprised between a recording Start obtained by the "REC" command and a Stop, which are usually both obtained via the same button. The clip may in its turn comprise several segments, a segment being a portion of a clip having a homogeneous content. For instance, if a person is filmed at a mountain resort, the take might consist of:

- take of the interviewee and of the interviewer (first segment),

- zoom to a local mountain (second segment),

- panning to surrounding mountains (third segment),

- further take of the interviewee and of the interviewer (fourth segment).

The camera-man, after starting the take by hitting the recording button of the camcorder, can insert voice comments. To this purpose, in the preferred embodiment of the invention, at the time of commenting a part of the take (segment), enables the step of acquiring the starting Time Code of the segment by pressing button EK. The Time Code generated by the camcorder at the time when button EK has been pressed and then released is sent to logic circuit LOG.

The first incoming Time Code, which serves for the initial alignment between the text and the video of the shooting, is stored. The camera-man then presses key TK and, while keeping it pressed, utters the name of the Type of the data about to be input. Transcriptor TRN compares the voice transcription with the items in the list of types, contained in dictionary T-DIC and, if it recognizes the type, prepares for its instantiation (field filling). If the type is not recognized, it signals an error. The camera-man then releases key TK and begins to fill the field for the selected data type, consistently with field, i.e., free text for a descriptive field, or structured text for a structured field.

The imput metadata may be stored in a number of ways. For instance, the space reserved for user data (user bits) can be used, which exists in all professional audio/video recording formats, or the metadata can be saved on a dedicated medium, such as a smartcard or a floppy disk. In this case it is possible to extract the metadata, say in order to insert it in a database, without having to transfer the video, with considerable time saving. This is particularly useful in news production, where the times available for assembling a service before broadcasting are often very short.

Physical formatting of the metadata can be performed according to any of the numerous standards available, such as XML (Specifications of the W3C consortium, <http://www.w3.org/TR/2000/REC-xml-20001006>) or KLV (standard SMPTE 336M).

A further possibility consists in inserting both video and audio of the take in a file comprising room also for inserting metadata. To such an end, both proprietary and standard file formats are suitable, such as, for instance, standard GFX (Standard SMPTE 360M) or the future standard MXF.

An example of a take corresponding to an interview of a person with shots of alpine panorama is described below, the take being stored on magnetic tape (audio and video), while the metadata, organized in XML files, are stored on a removable memory.

The camera-man turns on the camera an presses key RK to initiate a take. An XML file is automatically opened, which will contain the metadata, and the Time Code for start of shooting is acquired. Subsequently, while keeping Type selection button TK pressed, the camera-man utters "title" and, after releasing the button, utters the free-text sentence "Interview to [name and surname] on holidays at Cervinia in Val d'Aosta"; he again presses button TK while uttering "tape", then, after releasing button TK, utters the words "cassette one" in order to give a value for the field, and so on until the interview is over. Moreover, during the interview, the camera-man zooms to Mount Cervino, pans with a long shot to the surrounding mountains and finally portrays the interviewee and the journalist again. At the start of each of these takes the camera-man presses key EK to acquire the time code.

All the transcribed values, cocenring either the type or its filling, are displayed on the viewfinder so that the operator can check the accuracy of the transcription. If the transcription is not accurate, several procedures may be available for correction, such as repeating the field. Moreover, if the camera-man, during the take, wishies to stop the transcription, he will keep buttonn EK pressed to stop voice input from the microphone.

The sequence of steps might then be as listed below, where the voice of the camera-man is given.

Press REC on the videocamera, thus acquiring starting Time Code 00:01:00:00
TK pressed: "TITLE", TK released "Interview to [name surname] at Cervinia in Val d'Aosta"
Press EK, thus acquiring starting Time Code 00:01:05:22
TK pressed: "TAPE", TK released "cassette one"
TK pressed: "JOURNALIST", TK released "[name and surname]"
TK pressed: "DATE", TK released "fifteen August twothousandandtwo"
TK pressed: "TIME", TK released "sixteen twenty"
TK pressed: "LOCATION", TK released "Cervinia, cable car departure station"

Press EK to acquire Time Code for change of take 00:03:35:15
TK pressed: "SURROUNDINGS", TK released "Take of Cervino"
TK pressed: "TECNIQUE", TK released "Zoom"

Press EK to acquire Time Code for change of take 00:04:05:20
TK pressed: "SURROUNDINGS", TK released "Take of surrounding mountains"
TK pressed: "TECNIQUE", TK released "Pan with long shot"
TK pressed: "TAKE", TK released "Good"
Press EK to acquire starting Time Code 00:05:10:08
TK pressed: "DESCRIPTION", TK released "Completion and end of interview"

Press RK on videocamera to acquire Time Code for end of take 00:07:05:15

The Time Code values are supplied by the camcorder and are therefore those which identify the audio and video of the taped shooting. Transcriptor TRN converts to text whatever is spoken aloud by the camera-man and transfers the text to logic circuit LOG to generate the XML file. The name at the start of each record denotes the desired operation, which may be:

Press RK with automatic filling of the time reference field, i.e. the Time Stamp/Time Code, press key EK, press key TK, automatic type selection SEL, automatic filling of filed AUT.

```
<CLIP>
<REC Time Stamp = "Time Code"  TSINI ="00:01:00:00"/>
<TK Type= "Title" Value= "Interview to N C at Cervinia in Valle d'Aosta"/>
        <EK TSINI="00:01:05:22"/>
        <TK Type= "Tape" Value= " Cassette 1" />
        <TK Type= "Reporter" Value= "Name and Surname" />
        <TK Type= "Date" Value= "15 August 2002" />
        <TK Type= "Time" Value= "16.20" />
        <TK Type= "Location" Value= "Cervinia, cable car departure station" />

        <EK TSINI= "00:03:35:15"/>
        <TK Type = "Surroundings"  Value = "Take of Cervino" />
        <TK Type = "Tecnique"  Value = "Zoom" EK="00:03:35:15"/>
        <EK TSINI= "00:04:05:20"/>
        <TK Type = "Surroundings"  Value = "Take of surrounding mountains" />
        <TK Type = "Tecnique"  Value = "Long shot pan" />

        <EK TSINI= "00:05:10:08"/>
        <TK Type = "Description"  Value = "Take of surrounding mountains"/>
<REC Time Stamp = "Time Code" EK FINE= "00:07:05:15"/>
<TK Type= "Take" Value = "good"/>
</CLIP>
```

The generated XML file is stored on a removable memory. All the text thus transcribed is therefore synchronized with the video as recorded on cassette, since it has the same time reference supplied by the Time Code.

Although it is generally preferred to store video and audio on a magnetic cassette and the metadata in a file, the invention also contemplates that the video is also converted to a file, e.g. according to the MXF file format, and in this case the metadata might, too, be inserted into that file format. Even in that case, the video time references are inserted in the metadata, according to the procedures described above, thereby allowing the metadata to be synchronized with the video.

The "Types" shown in the example are examplary. It might be advantageous, for the description of the metadata, to follow a standard that is already defined or is about to be defined, e.g. the standard MXF/KLV as defined by SMPTE.

Alternatively to the procedure described above, which for its complexity requires a high degree of attention and a considerable training by the camera-man, it is possibile to follow a simplified procedure, where classification of the metadata into types is dispensed with, only free-text description being provided. In this case, while button TK is absent or disabled, the camera-man merely presses key RK, thereby enabling the transcriptor, which transcribes everything the camera-man utters and inserts it into a single, free-text-description field. The transcription is now momentarily turned off by pressing key EK, or finally turned off by pressing RK. After the Stop, the status of the take is requested and the metadata file concerning the take is then closed. The generated XML file will then be:

```
<CLIP>
<REC Time Stamp = "Time Code"  EK INI ="00:01:00:00"/>
<SEL Type = "Description"  Value = "Interview of person xxx yyy made at Cervinia in Valle
d'Aosta on 15 August 2002 at 16.20 with take of Cervino and panorama, cassette one"/>
<REC Time Stamp = "Time Code" EK FINE= "00:07:05:15"/>
<SEL Type= "Take", Value = "good"/>
</CLIP>
```

Types "Description" and "Take" are automatically defined in response to the RK commands.

Depending on the technology chosen, either analog or digital, the video, audio and the metadati are therefore coded and stored according to one of the following procedures:

1 - audio and video are stored on the recorder cassette, in the conventional format used in current video recorders, i.e. as analog video (ex. Betacam) o digital (uncompressed D1, D5, Digital Betacam, MPEG2/IMX, DVCPRO50/25, DV, etc.) or in any other desired format. The identifying metadata, which may be standard or proprietary to the manufacturer, is inserted on selected tracks with the modalities set by the manufacturer. The metadata generated by the camera-man and transcribed from voice or introduced through another input system, are also inserted in areas of the tape chosen by the manufacturer of the video recorder and according to modalities also chosen by the manufacturer. Voice, if recorded, is also inserted on tape in the areas and according to modalities selected by the manufacturer.

2 - audio and video are stored on tape, according to current or future recording procedures, as mentioned under section 1, together with an indentifier which may be standard or proprietary to the manufacturer; the metadata generated by the operator are stored as files on removable storage medium, e.g. Memory Stick, CompactFlash, magnetic, optical or magneto/optical disks, etc., together with an identifier of the A/V material. The voice of the operator, contained in an audio file, may also be stored on such removable medium.

3 - audio and video are stored in digital form on a hard disk, DVD, etc., as compressed or uncompressed files. In this case, the metadata and the operator's voice may be stored on the same medium as separate files, and therefore by the synchronization modes explained in section 2, or they may all (Audio, Video, Metadata, Voice, etc.) be packaged in a single file, possibly by the MXF standard, which is about to be adopted by the SMPTE, and transferred as an MXF file from the videocamera to the video/audio processing sites.

SMPTE (Society of Motion Picture and Television Engineers) has defined and standardized a metadata called UMID (Unique Media Identifier), known as standard SMPTE 330M for the identification of sequences of video shootings. The UMID metadata substantially comprises space and time coordinates supplied by a GPS receiver as well as an alphanumeric identifier, unique for the shooting, which is generated at the time of the shooting based on the time, the location and a randomized parameter. The identifier is associated with and follows the audiovisual material, and comprises a compulsory portion consisting of an identifying value to be generated at the time of the shooting based on the time, the location and a randomized parameter, and an optional portion containing the space and time coordinates of the operation, automatically supplied by a GPS receiver associated with the camera. The identifier allows the audiovisual clip to be associated with text and multimedial information, metadata, which are stored in different places, e.g. in a database.

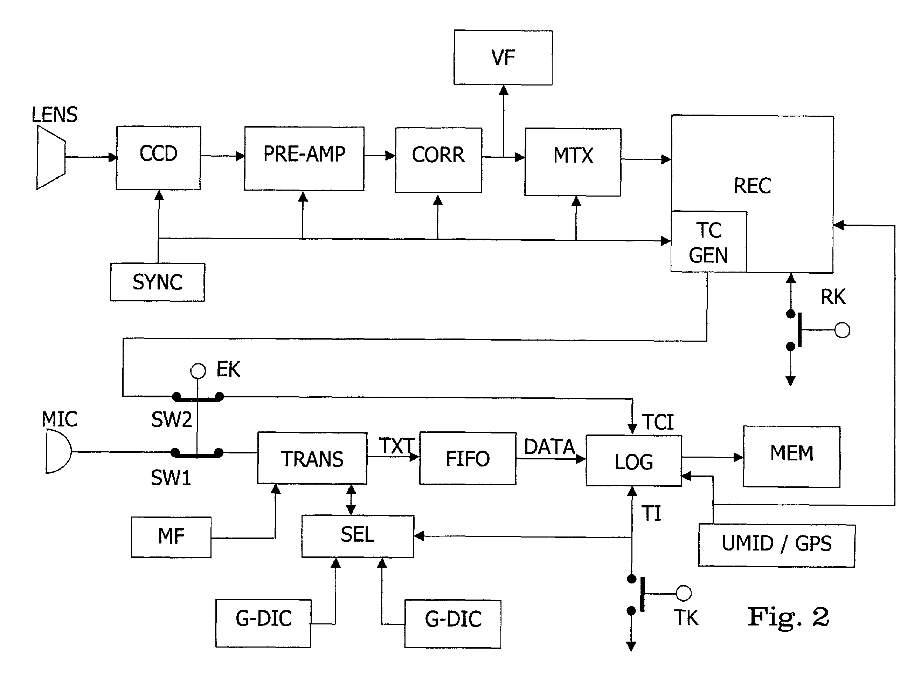

The above mentioned proposal for a UMID standard is utilized in a second preferred embodiment of the invention, shown on Fig. 2.

The embodiment of Fig. 2 substantially includes all the components of Fig. 1, with the same references. The embodiment of Fig. 2 differs from Fig. 1 for the inclusion of a generator of a UMID identifier provided with a GPS receiver, which generator continually generates the UMID metadata and makes it available to logic circuit LOG on an input IDI. Whenever logic circuit LOG inserts a time stamp in the metadata (as described above), also inserts the UMID identifier in the metadata flow that is associated with the shooting, in the value field of a metadata type provided to this end. The UMID metadata is also made available to video recorder REC of the videocamera for univocally identifying the video clips/frames, this being the main object of its standardization by SMPTE.

Obviously, the camcorder of the invention may include, beside the main functions as described above, also other keys and controls for carrying out other accessory functions as may be useful for the operating effectiveness of the apparatus. By way of example, functions may be made available to the camera-man to enable him to open the XML file, examine it in the viewfinder and modify it. Designing the software to implement such functionalities is obvious for a person skilled in the art, and a description of such functions is therefore omitted for the sake of simplicity.

## Claims

1.  A metadata generator device for identifying and indexing audiovisual material during a shooting from a camcorder, **characterized in that** it comprises a voice-to-text transcriptor (TRN) driven by a microphone (MIC), and feeding the transcripted text to a first input (DATA) of formatter-recorder means (LOG) having a second input (TCI) to which corresponding time codes from the the audiovisual material are applied, **in that** said formatter-recorder means (LOG) transfer said text and said time codes to a digital data recording medium (MEM), under control of enabling means actuatable by an operator (EK, SW1, SW2, TK), and **in that** the transcription results are displayed in real time on a display (VF) so that an operator may correct them in case of a transcription error.

2.  The metadata generator device of claim 1, **characterized in that** said metadata comprise free-text descriptions.

3. The metadata generator device of claim 1, **characterized in that** said metadata comprise data for instantiation of predefined fields.

4. The metadata generator device of any of claims 1 to 3, **characterized in that** said metadata comprise commands of insertion of break-points.

5. The metadata generator device of any of claims 1 to 4, **characterized in that** each of said metadata comprises at least one type field for storing one of a predefined, restricted set of type codes and one value field for storing a text string; and **in that** said enabling means further comprise a type indication control (TK) acting on one input (TI) of the formatting an recording means (LOG) for signaling, when actuated by the operator, that the current text string is a type indication.

6. The metadata generator device of claim 5, **characterized in that** the transcriptor (TRN) has access to at least two dictionaries (G-DIC, T-DIC), including a dictionary of types (T-DIC), through a selector (SEL), and **in that** said type indication control (TK) drives the selector to select, when actuated by the operator, the dictionary of types (T-DIC).

7. The metadata generator device of any of claims 1 to 6, **characterized in that** said enabling means comprise a first switch (SW1) connecting the microphone (MIC) to the input of the transcriptor (TRN) and a second switch (SW2) connecting an output of time codes from the camcorder to a time code input (TCI) of said formatter-recorder means (LOG).

8. The metadata generator device of any of claims 1 to 6, **characterized in that** it further comprises a UMID identifier generator according to standard proposal SMPTE 330M for clip identification.

9. The metadata generator device of claim 8, **characterized in that** the UMID identifier generator applies its output signal to an input (IDI) of the logic circuit (LOG).

10. The metadata generator device of claim 9, **characterized in that** the logic circuit (LOG) is programmed for inserting among the metadata the UMID identifier whenever it inserts a time reference as supplied by the video recorder.

11. The metadata generator device of any of claims 1 to 10, **characterized in that** said digital data recording medium is a track of videomagnetic tape of the camcorder that is reserved for metadata.

12. The metadata generator device of any of claims 1 to 10, **characterized in that** said digital data recording medium is a removable memory card.

13. The metadata generator device of any of claims 1 to 12, **characterized in that** said formatter-recorder means format said metadata as files.

14. The metadata generator device of claim 13, **characterized in that** said file is an MXF file.

15. The metadata generator device of claim 13, **characterized in that** said file is a GXF file.

16. The metadata generator device of any of claims 1 to 15, **characterized in that** said enabling means (EK, SW1, SW2, TK) are actuatable by the operator by means of at least one key (EK).

17. The metadata generator device of claim 5, **characterized in that** detto type identification control (TK) is actuatable by the operator by means of a key.

18. The metadata generator device of any of claims 1 to 17, **characterized in that** it is incorporated in a camcorder.

Fig. 1

LENS

CCD

SYNC

PRE-AMP

CORR

VF

MTX

REC

TC GEN

RK

MEM

UMID / GPS

TCI

LOG

TI

TK

DATA

FIFO

TXT

TRANS

SEL

G-DIC

G-DIC

MF

EK

SW2

SW1

MIC

Fig. 2

**European Patent Office**

**EUROPEAN SEARCH REPORT**

Application Number

EP 02 42 5439

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 75885 A (DAVID MORGAN WILLIAM AMOS ;DORRICOT MARTIN REX (GB); SONY UK LTD ()) 11 October 2001 (2001-10-11) * page 26, line 25 - page 38, line 1 * | 1,2, 8-12,18 | G11B27/10 G11B27/031 G11B27/11 G11B27/30 |
| Y | | 3-7, 13-17 | G11B27/28 G11B27/34 |
| Y | EP 1 014 338 A (HEWLETT PACKARD CO) 28 June 2000 (2000-06-28) * section [0019] * | 3-7,16, 17 | |
| Y | WO 01 75886 A (HARRADINE VINCE CARL ;DAVID MORGAN WILLIAM AMOS (GB); SONY UK LTD) 11 October 2001 (2001-10-11) * page 41, line 5-14 * | 13-15 | |
| A | EP 0 699 941 A (EASTMAN KODAK CO) 6 March 1996 (1996-03-06) * column 12, line 34 - column 13, line 46 * | 1,2 | |
| A | WO 96 36171 A (INDEX SYSTEMS INC;KWOH DANIEL S ; YUEN HENRY C (US)) 14 November 1996 (1996-11-14) * abstract * | 1,16,17 | TECHNICAL FIELDS SEARCHED (Int.Cl.7) G11B H04N |

The present search report has been drawn up for all claims

| Place of search | Date of completion of the search | Examiner |
|---|---|---|
| THE HAGUE | 11 December 2002 | Mourik, J |

EPO FORM 1503 03.82 (P04C01)

**EP 1 378 911 A1**

**ANNEX TO THE EUROPEAN SEARCH REPORT
ON EUROPEAN PATENT APPLICATION NO.**

EP 02 42 5439

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2002

| Patent document cited in search report | | Publication date | Patent family member(s) | | Publication date |
|---|---|---|---|---|---|
| WO 0175885 | A | 11-10-2001 | GB | 2361091 A | 10-10-2001 |
| | | | GB | 2361095 A | 10-10-2001 |
| | | | GB | 2361130 A | 10-10-2001 |
| | | | AU | 4265101 A | 15-10-2001 |
| | | | EP | 1208566 A1 | 29-05-2002 |
| | | | WO | 0175885 A2 | 11-10-2001 |
| | | | US | 2002131764 A1 | 19-09-2002 |
| EP 1014338 | A | 28-06-2000 | US | 6289140 B1 | 11-09-2001 |
| | | | CN | 1258162 A | 28-06-2000 |
| | | | EP | 1014338 A1 | 28-06-2000 |
| | | | JP | 2000215021 A | 04-08-2000 |
| | | | KR | 2000057082 A | 15-09-2000 |
| | | | TW | 442772 B | 23-06-2001 |
| WO 0175886 | A | 11-10-2001 | GB | 2361131 A | 10-10-2001 |
| | | | GB | 2362254 A | 14-11-2001 |
| | | | AU | 4265201 A | 15-10-2001 |
| | | | BR | 0105577 A | 26-02-2002 |
| | | | EP | 1188164 A1 | 20-03-2002 |
| | | | WO | 0175886 A1 | 11-10-2001 |
| | | | US | 2002146232 A1 | 10-10-2002 |
| EP 0699941 | A | 06-03-1996 | US | 5546145 A | 13-08-1996 |
| | | | DE | 69526548 D1 | 06-06-2002 |
| | | | DE | 69526548 T2 | 05-12-2002 |
| | | | EP | 0699941 A1 | 06-03-1996 |
| | | | JP | 8076288 A | 22-03-1996 |
| WO 9636171 | A | 14-11-1996 | AU | 5575496 A | 29-11-1996 |
| | | | CA | 2219220 A1 | 14-11-1996 |
| | | | EP | 0823178 A1 | 11-02-1998 |
| | | | JP | 11510654 T | 14-09-1999 |
| | | | WO | 9636171 A1 | 14-11-1996 |

EPO FORM P0459

For more details about this annex : see Official Journal of the European Patent Office, No. 12/82

12